# FASCICULE DE BREVET EUROPEEN

(11) **EP 0 553 190 B1**
(45) Date de publication et mention de la délivrance du brevet: **05.10.1994**
(21) Numéro de dépôt: 91918497.8
(22) Date de dépôt: 18.10.1991
(51) Int. Cl.: B01F 9/00

(54) **GODET MELANGEUR POUR UN MALAXEUR CENTRIFUGE PLANETAIRE, ET MALAXEUR RECEVANT DE TELS GODETS**
MISCHBECHER FÜR ZENTRIFUGALPLANETENMISCHER UND MIT SOLCHEN BECHERN VERSEHENE MISCHER
MIXING BOWL FOR A PLANETARY CENTRIFUGAL MIXER AND MIXER RECEIVING SUCH BOWLS

(30) Priorité: 18.10.1990 FR 9012904
(43) Date de publication de la demande: 04.08.1993
(73) Titulaire: Jouvin, Jean-Luc, F-72000 Le Mans (FR)
(72) Inventeur: Jouvin, Jean-Luc, F-72000 Le Mans (FR)
(74) Mandataire: Pernez, Helga
(86) Numéro de dépôt international: FR9100817
(87) Numéro de publication internationale: WO9206777

(56) Documents cités:
- DE-A- 3 117 648
- FR-A- 1 189 917
- GB-A- 1 180 738
- GB-A- 1 338 559
- US-A- 3 170 648
- US-A- 3 219 322
- US-A- 3 706 443

## Description

La présente invention se rapporte à un godet mélangeur pour des malaxeurs centrifuges planétaires, ainsi qu'à un malaxeur centrifuge planétaire recevant de tels godets.

On connaît, par exemple par la demande de brevet DE-A-2 209 850 et la demande de brevet EP-A-207 335, des malaxeurs centrifuges planétaires destinés par exemple à la préparation de mélanges utilisés dans l'art dentaire, notamment de pâtes à base d'alginate pour la prise d'empreintes dentaires et comprenant au moins un bras monté mobile en rotation autour d'un axe vertical, des moyens prévus sur ledit bras pour permettre le montage d'un godet mobile en rotation autour d'un axe incliné par rapport à l'axe de rotation du bras, et des moyens d'entraînement et de transmission planétaire pour faire tourner simultanément le bras autour de son axe de rotation vertical et le godet autour de son axe de rotation incliné par rapport à la verticale. Les godets prévus sur ces malaxeurs connus sont des godets de révolution comprenant un fond et une paroi latérale périphérique de forme générale cylindrique. Or, il s'avère que l'effet de malaxage auquel les produits à mélanger sont soumis dans de tels godets n'est souvent pas optimal, compte tenu, en autres, de la consistance des produits à mélanger et de l'effet d'adhérence de ces produits aux godets.

Pour améliorer cet effet de malaxage, il a déjà été proposé par la demande de brevet DE-A-2 001 301 de donner à de tels godets mélangeurs une forme intérieure qui ne soit pas de révolution. Selon les figures 17 et 18 de ce document, l'espace intérieur d'un godet mélangeur de configuration extérieure cylindrique présente la forme d'une fente transversale définie par deux parois planes parallèles et par deux parois d'extrémité semi-circulaires.

Il s'évère qu'un tel godet ne donne pas satisfaction du fait qu'un balourd trop important se produit, lors de la rotation du godet, en raison de la forme de ce dernier et du mouvement saccadé que les produits à mélanger subissent dans le godet.

Par ailleurs, un autre inconvénient des godets mélangeurs connus consiste dans les difficultés d'extraction du produit mélangé du godet. Cette extraction s'effectue généralement à l'aide d'une spatule qu'il est nécessaire de passer plusieurs fois dans le godet pour en retirer la totalité du contenu.

En outre, les godets connus, lorsqu'ils sont légers, c'est-à-dire à paroi latérale périphérique mince, subissent pendant le malaxage des déformations sous l'effet de la force centrifuge.

Un autre problème relatif aux godets connus concerne l'obturation de ces godets à l'aide d'un couvercle amovible emboîté sur ou dans le godet. Si cette obturation est hermétique, pour mettre le contenu du godet à l'abri de l'air ambiant, il se produit, lors de l'enlèvement du couvercle, une dépression à l'intérieur du godet (effet de ventouse). Pour remédier à cet effet de ventouse, on a déjà proposé de percer un petit trou dans le couvercle, mais dans ce cas le godet et son couvercle ne constituent pas une enceinte hermétique et, de plus, lors de l'enlèvement du couvercle, il se produit un appel d'air à travers le trou, provoquant un jet d'air qui fait, lorsque les produits contenus dans le godet se présentent sous forme pulvérulente, qu'une partie de ces produits est projetée hors du godet au moment de l'enlèvement du couvercle.

D'une manière générale, les malaxeurs planétaires centrifuges connus du type défini ci-dessus présentent par ailleurs l'inconvénient d'un coût élevé dû à la structure compliquée du malaxeur dans son ensemble et en particulier des moyens de support du bras rotatif et des moyens de support du godet mélangeur sur le bras rotatif. En effet, ces moyens de support comprennent généralement un arbre rotatif pour le bras ainsi qu'un arbre rotatif pour un porte-godet, ce qui implique l'utilisation de paliers (roulements) pour le montage de ces arbres. Par ailleurs, le maintien des godets, sur ces malaxeurs laisse souvent à désirer.

La présente invention a pour objet un godet mélangeur pour un malaxeur centrifuge planétaire, ce godet assurant un malaxage efficace tout en facilitant l'enlèvement des produits mélangés du godet. L'invention a également pour objet un godet mélangeur avec couvercle, empêchant toute déformation du godet pendant le malaxage et permettant à la fois une obturation hermétique du godet par le couvercle et un enlèvement du couvercle sans effet de dépression et sans appel d'air susceptible d'entraîner, dans le cas de produits pulvérulents à mélanger, une projection de ces produits vers l'extérieur du godet. L'invention a encore pour objet un godet mélangeur et un malaxeur centrifuge planétaire conçus de manière que le godet soit parfaitement maintenu en position sur le malaxeur. L'invention a de plus pour objet un malaxeur centrifuge planétaire de structure plus simple, donc plus fiable et moins coûteux que les malaxeurs connus.

Le godet mélangeur conforme à l'invention pour un malaxeur centrifuge planétaire comprend un fond et une paroi latérale périphérique de forme générale cylindrique. Selon l'invention, la paroi latérale présente, au moins intérieurement, au moins sur la partie inférieure de sa hauteur, en des zones espacées régulièrement réparties sur le pourtour du godet, au moins deux segments incurvés dont le rayon de courbure est supérieur au rayon de courbure des zones restantes. De plus, le godet comporte un guide central faisant saillie vers le haut sur le fond et présentant une forme extérieure non cylindrique telle que la distance radiale entre la face intérieure de la paroi latérale périphérique et ledit guide soit sensiblement la même sur tout le pourtour du guide.

Dans le cadre de l'invention, lesdits segments de la paroi latérale périphérique du godet dont le rayon de courbure est supérieur au rayon de courbure des zones restantes peuvent être au nombre de deux, trois ou même quatre. Plus ce nombre est élevé et moins la vitesse de rotation du godet doit être importante. Cependant, plus le nombre de ces segments est important et moins ces segments sont prononcés, donc efficaces.

Le godet mélangeur conforme à l'invention peut être équipé d'un couvercle à emboîtement percé d'un trou central dans son fond. Dans ce cas, ledit couvercle présente une profondeur d'emboîtement sur ou dans le godet qui est supérieure à l'épaisseur de son fond et le guide central du godet fait saillie vers le haut sur le fond du godet sur une hauteur telle qu'il obture le trou du couvercle uniquement lorsque ce dernier est emboîté à fond sur ou dans le godet.

Ainsi, le guide central coopère avec le trou du couvercle pour empêcher toute déformation du godet sous l'effet de la force centrifuge et pour assurer une obturation hermétique du godet lorsque le couvercle est emboîté à fond sur ou dans ce dernier. Lors de l'enlèvement du couvercle, le guide central dégage le trou du couvercle avant que ce dernier soit complètement déboîté, ce qui permet un équilibrage de la pression intérieure du godet avant l'enlèvement complet du couvercle. Il se produit ainsi, ni dépression à l'intérieur du godet, ni un appel d'air susceptible de projeter vers l'extérieur les produits pulvérulents à mélanger contenus dans le godet.

Pour améliorer le maintien du godet sur le bras rotatif du malaxeur, le guide central du godet présente un alésage débouchant du côté du fond du godet, ce qui permet d'emboîter le godet sur un élément de maintien en forme de tige monté sur le bras. Le godet se trouve ainsi maintenu en son centre, sur tout ou partie de sa hauteur, ce qui exclut tout risque d'éjection du godet pendant le fonctionnement, par exemple en raison d'une mise en place défectueuse du godet sur le bras.

Le malaxeur centrifuge planétaire conforme à l'invention destiné à recevoir au moins un godet du type défini ci-dessus comprend au moins un bras monté mobile en rotation autour d'un axe vertical. Des moyens sont prévus sur ledit bras pour le montage du godet de façon mobile en rotation autour d'un axe incliné par rapport à la verticale. Des moyens d'entraînement et de transmission planétaire sont par ailleurs prévus pour faire tourner simultanément ledit bras et ledit godet autour de leurs axes de rotation respectifs. Selon l'invention, les moyens de montage du godet sur le bras sont constitués par une tige de section circulaire fixée rigidement au bras, cette tige étant adaptée pour coopérer avec l'alésage du guide central du godet lorsque ce dernier est emboîté sur ladite tige.

Cette tige dont la fixation rigide sur le bras est très simple assure un bien meilleur maintien du godet que les porte-godets des malaxeurs connus qui doivent être profonds pour que le godet puisse y être emboîté et être, à la fois, maintenu et entraîné en rotation. L'entraînement en rotation du godet sur le malaxeur conforme à l'invention peut se faire directement par un pignon monté coaxialement à la tige en rotation sur le dessus du bras et présentant sur sa face supérieure des moyens susceptibles de coopérer, en vue de l'entraînement, avec le fond du godet.

De préférence, le bras du malaxeur conforme à l'invention est monté en rotation sur un axe fixe et porte sur le côté inférieur un pignon pour son entraînement en rotation. Les moyens de transmission planétaires pour entraîner le godet en rotation autour de son axe comprennent un pignon solidaire de l'axe fixe du bras, sur le côté supérieur du bras, ce pignon étant couplé par un pignon intermédiaire monté en rotation sur le bras avec ledit pignon coaxial à ladite tige.

De préférence, ledit pignon coaxial à la tige présente, sur le dessus, des moyens ayant une forme complémentaire de la forme extérieure non circulaire du godet.

En se référant aux dessins schématiques annexés, on va décrire ci-après plus en détail un mode de réalisation d'un malaxeur planétaire conforme à l'invention, ainsi que deux modes de réalisation de godet pour un tel malaxeur; sur les dessins :
la figure 1 est une coupe axiale d'un malaxeur conforme à l'invention à deux godets;
les figures 2 et 3 sont des vues de dessus de deux variantes de godets sans les couvercles.

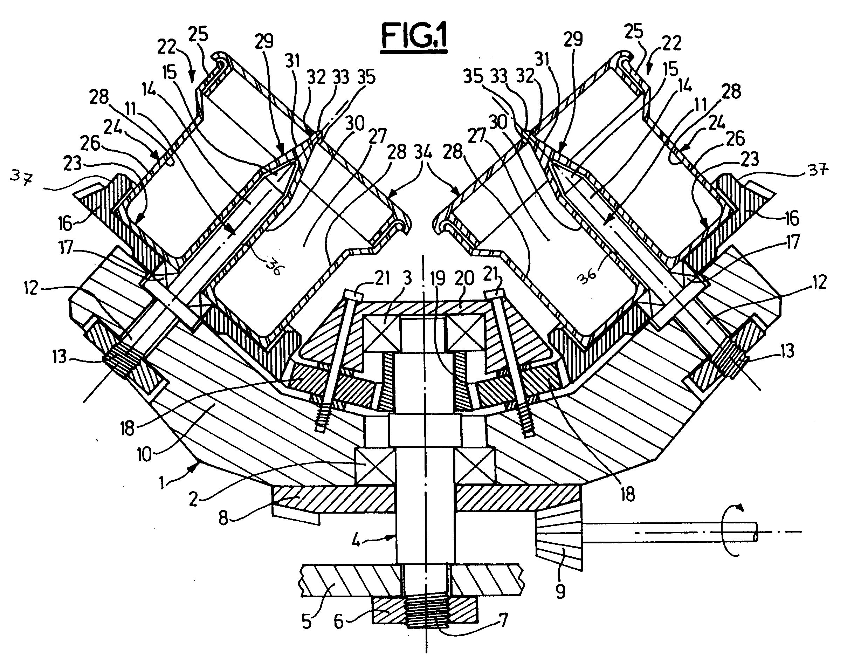

Selon la figure 1, un mélangeur planétaire centrifuge dont seules les parties mobiles sont représentées comprend un double bras 1 monté en rotation par deux roulements 2 et 3 sur un axe 4 vertical fixé à un support 5 à l'aide d'un écrou 6 vissé sur l'extrémité inférieure fileté 7 de l'axe 4, traversant un trou du support 5. Le bras double 1 porte, sur le côté inférieur, un pignon 8 concentrique à l'axe 4, ce pignon 8 étant attaqué par un pignon 9 entraîné par un moteur non représenté.

Le bras double 1 comprend deux bras 10 disposés dans un même plan contenant par l'axe 4. Chaque bras 10 porte, au voisinage de son extrémité libre, une tige 11 fixée rigidement au bras 10. Chaque tige 11 comprend une partie de fixation 12 traversant le bras 10 et rendue solidaire de ce dernier par un écrou 13, et une partie de montage 14 cylindrique dépassant le bras 10 vers le haut et se terminant par une pointe conique 15.

Il est à noter que l'axe de la tige 11 est incliné par rapport à la verticale, c'est-à-dire par rapport à l'axe 4, d'un angle compris entre environ 40 et 60°.

Un pignon 16 est monté en rotation par un roulement 17 sur la tige 11, sur le côté supérieur de chaque bras 10. Ce pignon est en prise avec un pignon intermédiaire 18 qui est monté en rotation sur le bras 10 et qui se trouve lui-même en prise avec un pignon 19 solidaire de l'extrémité supérieure de l'axe 4. Dans l'exemple représenté, l'axe 4 et les pignons intermédiaires 18 sont coiffés par un chapeau 20 fixé par des vis 21.

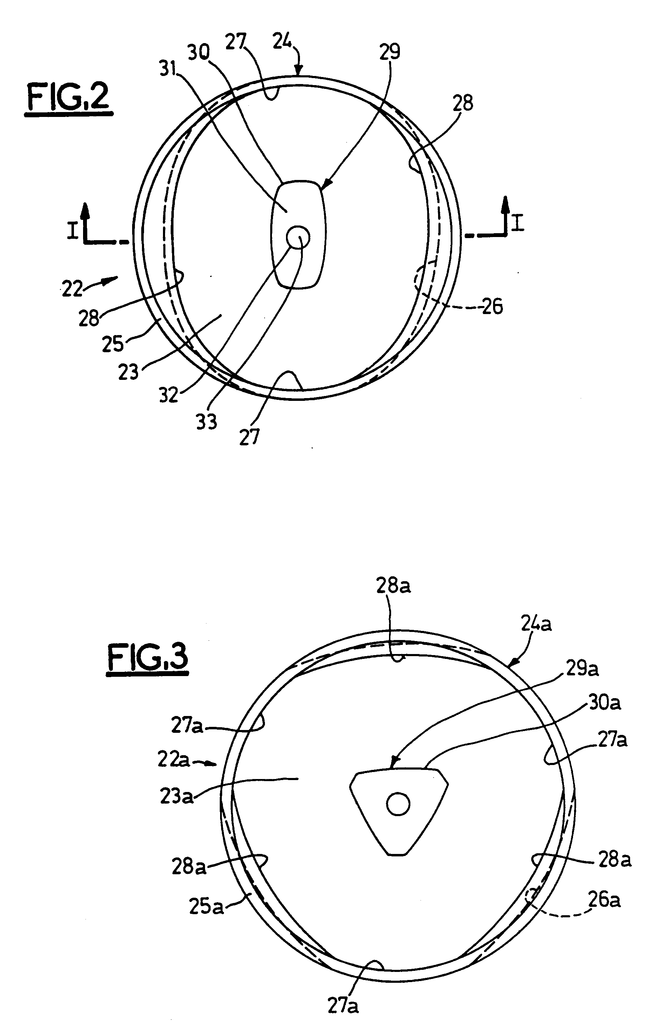

Chaque tige 11 sert à recevoir un godet mélangeur 22 représenté sur la figure 2 en vue de dessus et sur la figure 1 en coupe axiale suivant I-I de la figure 2.

Le godet 22 comprend un fond 23 sensiblement plat et une paroi latérale périphérique 24 qui présente une forme cylindrique dans sa partie supérieure 25 et une forme non cylindrique dans sa partie inférieure 26. Tel que cela apparaît surtout sur la figure 2, la partie inférieure 26 de la paroi latérale 24 comprend deux segments opposés 27 ayant le même rayon de courbure que la partie supérieure 25 de la paroi latérale 24, et deux segments opposés 28 qui, décalés respectivement de 90° par rapport aux segments 27, présentent un rayon de courbure plus important que les segments 27.

Chaque godet 22 comporte par ailleurs un guide central 29 faisant saillie vers le haut sur le fond 23 et présentant une forme extérieure (30) telle que la distance radiale entre la face intérieure de la partie inférieure 26 de la paroi latérale périphérique 24 et ledit guide 29 soit sensiblement la même sur tout le pourtour.

Tel que cela apparaît sur la figure 1, le guide 29 conserve cette forme extérieure sur toute la hauteur de la partie inférieure 26 de la paroi latérale 24 et est ensuite prolongé vers le haut par une partie 31 allant en s effilant en tronc de cône à peu près jusqu'au bord supérieur du godet 22. La partie 31 est suivie vers le haut d'une partie 32 cylindrique qui se termine par une pointe 33 conique.

Un couvercle 34 emboîté dans l'ouverture du godet 22 présente en son centre un trou 35 dont le diamètre est sensiblement égal au diamètre de la partie cylindrique 32 du guide 29. L'épaisseur (du fond) du couvercle 34 est inférieure à la profondeur d'emboîtement du couvercle 34.

Le guide 29 présente intérieurement un alésage 36 qui débouche sur le côté du fond 23 et dont la forme est adaptée à la forme et au diamètre de la partie 14 de la tige 11.

Il convient encore de noter que le pignon 16 monté en rotation sur la tige 11 elle-même solidaire du bras 10 comporte, sur le côté tourné vers le godet 22, une partie 37 en saillie conformée en accord avec la forme extérieure (non circulaire) que le godet 22 présente dans sa partie inférieure, de manière que lors de l'emboîtement du godet 22 sur la partie 14 de la tige 11, la partie inférieure du godet 22 vienne s'emboîter dans la partie 37 du pignon 16, le godet 22 étant alors solidaire en rotation du pignon 16.

Il est à noter encore que la partie cylindrique 32 du guide 29 présente une hauteur telle qu'eue obture le trou 35 du couvercle 34 uniquement lorsque ce dernier est emboîté à fond dans le godet 22. Par conséquent, le guide 29 dégage le trou 35 du couvercle 34, permettant ainsi un équilibrage de pression entre l'intérieur du godet et l'extérieur, dès le début du mouvement d'enlèvement du couvercle 34 du godet 22. Cela supprime donc tout effet de dépression s'opposant à l'enlèvement du couvercle. De plus, du fait du diamètre relativement important du trou 35, cela évite, lors de l'enlèvement du couvercle, la création d'un jet d'air vers l'intérieur du godet 22, et empêche ainsi une projection vers l'extérieur des produits contenus dans le godet 22 lorsque lesdits produits se présentent sous forme pulvérulente.

A ce sujet, il y a lieu de remarquer que le malaxeur conforme à l'invention peut trouver des applications dans tous les domaines, mais que l'une de ses applications particulièrement intéressantes se trouve dans le domaine de l'art dentaire, en vue de la préparation de pâte de prise d'empreintes, notamment à base d'alginate. L'utilisation des godets conformes à l'invention permet de préparer d'avance et de conserver dans les godets conformes à l'invention des doses prédéterminées de poudre d'alginate, l'obturation étanche de ces godets empêchant l'alginate de s'éventer. Ensuite, pour chaque préparation d'une dose de pâte de prise d'empreintes, il suffit de sélectionner le godet contenant la dose voulue, d'ouvrir ce godet, d'y ajouter une dose correspondante d'eau et de procéder ensuite au mélange de la pâte sur le malaxeur.

La présence, sur le malaxeur conforme à l'invention, de deux bras 10 portant chacun une tige 11 permet de préparer simultanément dans deux godets, soit une double dose d'un mélange, soit deux mélanges différents, par exemple de viscosités différentes. En cas d'utilisation d'un seul godet sur un bras, il suffit de placer une rondelle d'équilibrage sur la tige 11 de l'autre bras.

Les godets conformes à l'invention permettent dans ce cas d'utiliser de l'alginate normal au lieu de l'alginate du type "sans poussière" auquel il faut obligatoirement avoir recours avec les godets mélangeurs connus pour prévenir ou réduire les risques d'éjection de l'alginate en poudre lors de l'ouverture des godets, en raison du jet d'air qui se produit alors du fait du trou de petite taille prévu jusqu'à présent dans les couvercles des godets mélangeurs.

Le godet mélangeur 22a suivant la figure 3 diffère du godet mélangeur 22 de la figure 2 par la forme de la partie inférieure 26a de la paroi latérale 24a et par la forme extérieure du guide central 29a. En effet, suivant la figure 3, la partie 26a de la paroi latérale 24a comprend trois segments 27a ayant le même rayon de courbure que la partie supérieure 25a de la paroi latérale 24a, et trois segments 28a ayant un rayon de courbure plus important, les trois segments 27a et les trois segments 28a étant décalés respectivement de 120°. Ici également, le guide central 29a présente, dans sa partie inférieure 30a, une forme extérieure telle que la distance séparant la partie 30a du guide central 29a de la face intérieure de la partie de paroi latérale 24a soit sensiblement la même sur le tout le pourtour, ce qui facilite l'enlèvement des substances mélangées dans le godet à l'aide d'une spatule ayant une largeur correspondant sensiblement à ladite distance.

Un autre avantage du guide 29, 29a du godet et du couvercle 24 coopérant avec ce guide consiste dans la rigidité que cela procure au godet, c'est-à-dire dans l'absence de déformation du godet pendant le malaxage sous l'effet de la force centrifuge. En effet, le couvercle assure ainsi toujours le centrage de la paroi latérale périphérique sur le guide lui-même centré sur la tige 11 du malaxeur.

## Revendications

1. Godet mélangeur pour un malaxeur centrifuge planétaire, comprenant un fond et une paroi latérale périphérique de forme générale cylindrique, caractérisé par le fait que la paroi latérale (24, 24a) présente au moins intérieurement, au moins sur la partie inférieure (24, 24a de sa hauteur, en des zones espacées régulièrement réparties sur le pourtour, au moins deux segments (28, 28a) dont le rayon de courbure est supérieur au rayon de courbure des zones restantes (27, 27a), et que le godet (22, 22a) comporte un guide central (29, 29a) faisant saillie vers le haut sur son fond (23, 23a) et présentant une forme extérieure (30, 30a) telle que la distance radiale entre la face intérieure de la paroi latérale périphérique et ledit guide soit sensiblement la même sur tout le pourtour.

2. Godet suivant la revendication 1, comprenant un couvercle (34) à emboîtement percé d'un trou central (35) dans son fond, caractérisé par le fait que ledit guide (29, 29a) s'étend vers le haut sur une hauteur telle que son extrémité se terminant en pointe obture ledit trou du couvercle uniquement lorsque ce dernier est emboîté à fond dans ou sur le godet.

3. Godet suivant la revendication 2, caractérisé par le fait que ledit guide (29, 29a) présente une partie cylindrique coopérant avec ledit trou (35) du couvercle (34) et prolongé par une pointe conique (33).

4. Godet suivant l'une quelconque des revendications précédentes, caractérisé par le fait que ledit guide (29, 29a) présente un alésage (36) de section circulaire débouchant vers le bas, du côté du fond.

5. Malaxeur centrifuge planétaire destiné à recevoir au moins un godet suivant la revendication 4, comprenant au moins un bras (10) monté mobile en rotation autour d'un axe vertical, des moyens sur ledit bras pour le montage d'un godet de façon mobile en rotation autour d'un axe incliné par rapport à la verticale, et des moyens d'entraînement et de transmission planétaire pour faire simultanément tourner ledit bras et ledit godet autour de leurs axes de rotation respectifs, caractérisé par le fait que lesdits moyens de montage dudit godet sur le bras sont constitués par une tige (11) de section circulaire fixée rigidement au bras (10) de manière à faire saillie vers le haut sur ce dernier, cette tige coopérant avec l'alésage (36) du guide (29) du godet (21) lorsque ce dernier est emboîté sur ladite tige.

6. Malaxeur suivant la revendication 5, caractérisé par le fait qu'il comprend un axe vertical (4) fixe, au moins un bras (10) monté en rotation sur ledit axe fixe et portant un pignon (8) pour l'entraînement en rotation dudit bras, et un pignon (16) d'entraînement en rotation dudit godet, monté en rotation sur ledit bras coaxialement à ladite tige (11) et couplé avec un pignon fixe (19) solidaire dudit axe fixe, par un pignon intermédiaire (18) monté en rotation sur ledit bras.

7. Malaxeur suivant la revendication 5 ou 6, caractérisé par le fait qu'il comprend deux bras (10) portant chacun une tige (11), pour le malaxage simultané de deux mélanges contenus dans deux godets montés sur les deux tiges.

## Claims

1. A mixing cup for use in a planetary centrifugal mixer, including a bottom and a generally cylindrical shape pheripheral side wall, characterized in that said side wall (24, 24a) presents at least internally, at least on the lower portion (24, 24a) of the height thereof, at evenly spaced regions on the circumference thereof, at least two segments (28, 28a), the radius of curvature of which is greater than the radius of curvature of the remaining regions (27, 27a), and in that said cup (22, 22a) comprises a central guide (29, 29a) upwardly protuding from the bottom thereof (23, 23a) and showing an external shape (30, 30a) such that a radial distance between internal face of said peripheral side wall and said guide is substantially the same on the whole circumference.

2. The cup as recited in claim 1, including a nested cover (34) having a hole (35) pierced in the center thereof, characterized in that said guide (29, 29a) upwardly extends along suchan height that the tip terminated end thereof occludes said cover hole only when the latter is thoroughly nested into or on said cup.

3. The cup as recited in claim 2, characterized in that said guide (29, 29a) presents a cylindrical portion cooperating with said cover (34) hole (35) and extended with a conical tip (33).

4. The cup as recited in any one of preceding claims, characterized in that said guide (29, 29a) presents a circular cross-section bore (36) opening into the downward portion thereof, at the bottom end.

5. A planetary centrifugal mixer adapted to receive at least a cup as recited in claim 4, including at least an arm (10) rotatably mounted around a vertical axle, means on said arm for rotatably mounting a cup around a vertically slanted axle, and driving and planetary transmitting means in order to simultaneously rotate said arm and said cup around the respective rotating axes thereof, characterized in that said means for mounting said cup onto the arm include a circular cross-section rod (11) which is rigidly fixed to said arm (10) so as to upwardly protude from the latter, with this rod cooperating with said bore (36) of said cup (21) guide (29) when the latter is nested into said rod.

6. The mixer as recited in claim 5, characterized in that said mixer is provided with a fixed vertical shaft (4), at least on arm (10) rotatably fitted on said fixed shaft and carrying a pinion (8) for rotatably driving said arm, and a pinion (16) for rotatably driving said cup, rotatably fitted on said arm in coaxial relationship with said rod (11) and coupled to a fixed pinion (19) integral with said fixed shaft, by means of an intermediate pinion (18) rotatably mounted on said arm.

7. The mixer as recited in claim 5 or 6, characterized in that said mixer includes two arms (10) each carrying a rod (11), with a view to simultaneously mixing two mixtures contained in two cups which are arranged on both rods.

## Patentansprüche

1. Mischbecher für einen zentrifugalen Planetenmischer umfassend einen Boden und eine Umfangsseitenwand von im allgemeinen zylindrischer Form,
dadurch gekennzeichnet,
daß die Seitenwand (24, 24a) mindestens an ihrer Innenseite, mindestens in ihrem unteren Bereich, in auf dem Umfang regelmäßig verteilten Abständen, mindestens zwei Abschnitte (28, 28a), deren Krümmungsradius größer ist als der Krümmungsradius der übrigen Abschnitte (27, 27a), und
daß der Becher (22, 22a) eine von dessen Boden (23, 23a) aus nach oben vorspringende zentrale Führung (29, 29a) aufweist, deren äußere Form (30, 30a) so beschaffen ist, daß die radiale Entfernung zwischen der Innenfläche der Umfangsseitenwand und der genannten zentralen Führung auf dem gesamten Umfang im wesentlichen gleich bleibt.

2. Becher nach Anspruch 1 umfassend einen aufsteckbaren Deckel (34) mit einem zentral in dessen Boden angebrachten Loch (35),
dadurch gekennzeichnet, daß die zentrale Führung (29, 29a) sich so weit nach oben erstreckt, daß ihr spitz zulaufendes Ende das genannte Loch im Deckel nur dann abschließt, wenn der Deckel vollständig in oder auf den Becher gesteckt ist.

3. Becher nach Anspruch 2,
dadurch gekennzeichnet, daß die zentrale Führung (29, 29a) einen mit dem Loch (35) im Deckel (34) zusammenwirkenden zylindrischen Abschnitt aufweist, welcher in eine konische Spitze (33) übergeht.

4. Becher nach einem der vorangegangenen Ansprüche, dadurch gekennzeichnet, daß die Führung (29, 29a) eine runde, nach unten zum Boden hin offene Bohrung (36) aufweist.

5. Zentrifugaler Planetenmischer zur Aufnahme mindestens eines Bechers gemäß Anspruch 4, umfassend mindestens einen beweglich um eine vertikale Achse drehbar angebrachten Arm (10), Mittel auf dem Arm zur Aufnahme eines Bechers in um eine zur Vertikalen schräg geneigte Achse drehbarer Weise, und Planetenantriebs- und übertragungsmittel, um gleichzeitig den Arm und den Becher um deren Rotationsachsen in Drehung zu bringen,
dadurch gekennzeichnet, daß die Mittel zur Aufnahme des Bechers auf dem Arm aus einem kreisförmigen, mit dem Arm (10) fest verbundenen Stift (11) bestehen, welcher auf diesem nach oben ragt und mit der Bohrung (36) der Führung (29) des Bechers (21) zusammenwirkt, wenn dieser auf dem Stift aufgesteckt ist.

6. Mischer nach Anspruch 5,
dadurch gekennzeichnet, daß er umfaßt: eine drehfeste vertikale Achse (4), mindestens einen auf der drehfesten Achse drehbar montierten Arm (10) mit einem Antriebsritzel (8) für den Drehantrieb des Arms, und ein Antriebsritzel (16) für den Drehantrieb des Bechers, welcher drehbar auf dem Arm koaxial zum Stift (11) angebracht ist und mit einem drehfesten, mit der drehfesten Achse zusammenwirkenden Ritzel (19) über ein auf dem genannten Arm drehbar angebrachtes Zwischenritzel (18) gekoppelt ist.

7. Mischer nach Anspruch 5 oder 6,
dadurch gekennzeichnet, daß er zwei Arme (10) umfaßt mit je einem Stift (11) zum gleichzeitigen Mischen zweier Mischungen in zwei auf den zwei Stiften aufgesteckten Bechern.
